# Europäisches Patentamt

## European Patent Office

## Office européen des brevets

(11) Veröffentlichungsnummer: **0 195 824**
**A1**

(12) # EUROPÄISCHE PATENTANMELDUNG

veröffentlicht nach Art. 158 Abs. 3 EPÜ

(21) Anmeldenummer: 85905453.8

(22) Anmeldetag: 25.09.85

Daten der zugrundeliegenden internationalen Anmeldung:

(86) Internationale Anmeldenummer:
**PCT/SU 85/00082**

(87) Internationale Veröffentlichungsnummer:
**WO 86/01976 (10.04.86 86/8)**

(51) Int. Cl.⁴: **A 01 G 31/00**, A 01 G 31/02

(30) Priorität: 26.09.84 SU 3794269
12.08.85 SU 3931509

(43) Veröffentlichungstag der Anmeldung: **01.10.86**
**Patentblatt 86/40**

(84) Benannte Vertragsstaaten: **DE FR GB IT NL**

(71) Anmelder: **SPETSIALNOE KONSTRUKTORSKOTEKHNOLOGICHESKOE BJURO UPRAVLENIA LESOPARKOVOGO KHOZYAISTVA (SKTB), ul. Gorkogo 12, Moscow, 103009 (SU)**

(72) Erfinder: **ZAGORULKO, Nikolai Petrovich, ul. Egerskaya, 5-1-59, Moscow, 107014 (SU)**
Erfinder: **KRASILEV, Petr Efimovich, pr. Koroleva, 28-93, Moskovskaya obl. Kaliningrad, 141070 (SU)**

(74) Vertreter: **Finck, Dieter et al, Patentanwälte v. Füner, Ebbinghaus, Finck Mariahilfplatz 2 & 3, D-8000 München 90 (DE)**

(54) **VERFAHREN UND VORRICHTUNG ZUM HYDROPONISCHEN ZÜCHTEN VON PFLANZEN.**

(57) A method of the hydroponic growing of plants consists in growing them in tubes (1) provided with openings and oriented horizontally whereas a nutrition solution is fed to them periodically during a time $t_1$ equal to 4–5 minutes with its subsequent discharging during a time $t_2$ and keeping the plants without the nutrition solution during a time $t_3$ with a relationship $t_1 : t_2 : t_3 = 1 : 1.0–1.5 : 5.0–8.75$, the whole cycle being subsequently repeated. An installation for implementation of the method represents in itself a system of polymer tubes (1), oriented in one horizontal plane and forming altogether a tube module provided with a distributing collector (2) located along the ends of the tubes and directly connected to a collecting chamber (4). A feeding main (5) is provided with a pump (6) and has a form of a ⊓-shaped pipeline which is connected to the collecting chamber (4). The collecting chamber (4) is additionally connected to a container (3) for the nutrition solution through an emergency pipeline (9) with a valve (10).

EP 0 195 824 A1

0195824

# VERFAHREN ZUM AUFZIEHEN VON PFLANZEN IN AEROWASSERKULTUR UND ANLAGE ZUR DURCHFÜHRUNG DIESES VERFAHRENS

## Gebiet der Technik

Die Erfindung bezieht sich auf das Gebiet der Landwirtschaft und insbesondere auf die Technologie der Aufzucht von Pflanzen, vorzugsweise von Blumenkulturen im Gewächshaus und auf eine Anlage zur Realisierung dieser Tecnnologie.

## Vorheriger Stand der Technik

Zur Zeit hat sich die Aufzucht verschiedener Pflanzen ohne Verwendung der Erde in der Weltpraxis stark verbreitet. Als eine der aussichtsreichen Richtungen der Pflanzenproduktion im Gewächshaus gilt die Hydroponik. Der erdelose Pflanzenbau erfolgt unter Berücksichtigung aller Fortschritte auf dem Gebiet der Chemie, Biologie und Elektronik. Dies ermöglicht eine starke Ertragssteigerung und Produktionsgüteerhöhung unter unvergleichlich besseren Arbeitsbedingungen zu erzielen. Es gibt unterschiedliche Verfahren zum Aufziehen von Pflanzen in Hydrokultur, die man je nach dem Charakter des anwendbaren Substrats sowie nach der Zufuhrtechnik der Nährlösung klassifiziert. Alle bekannten Verfahren des erdelosen Pflanzenbaues werden ihrerseits abhängig von der Zufuhrtechnik der Nährlösung in zwei Gruppen untergeteilt und zwar Hydroponik unter Glas, wobei die Nährlösung am Wurzelsystem kontinuierlich vorbeizirkuliert, und Hydroponik im Freien, wobei die Nährlösung abgestimmt auf Pflanzenbedürfnisse und klimatische Bedingungen periodisch zugeführt wird.

In den letzten Jahren gewinnt ein von dem Britischen staatlichen Forschungsinstitut für Gartenbau entwickeltes Verfahren zur Kultivierung von Pflanzen in Kunststoffrohren, durch welche die Nährlösung zugeführt wird, eine grössere Bedeutung, nämlich das NFT-Verfahren.

Das Wesen dieses Verfahrens besteht darin, daß dem Wurzelwerk eine umlaufende Filmnährlösung zwecks Versorgung mit der erforderlichen Menge von Wasser, Luft und Nährstoffen zugeführt wird. Praktisch bereitet man mit einer Schräge ausgebildete Rinnen aus Polyäthylenfolie vor und läßt einen sehr (etwa 1 cm) dünnen Strahl der Nährlösung zwischen Rinne und Behälter für die Nährlösung zirkulieren. Wegen kleiner Füllhöhe der Nährlösung können die Pflanzen den Luftsauerstoff im Überfluß durch die Nährlösung aufnehmen, so daß die Notwendigkeit, eine Einrichtung zum Versorgen mit Sauerstoff zusätzlich anzubringen, fortfällt. Dies begünstigt eine bedeutende Verminderung von Kosten für Ausrüstungen und eine leichte Montage derselben. Kompakt und leicht ausgeführte Rinnen bieten die Möglichkeit, ein System zum Aufziehen von Pflanzen auf mehrstufigen Drehgestellen ohne Mühe einzurichten.

Die Anwendung dieses Verfahrens bereitet jedoch eine Reihe von Schwierigkeiten. Wegen kleinen Volumens der fließenden Nährlösung kommt es zu schroffen Änderungen ihrer Kennwerte. Es ist notwendig, die Konzentration und den pH-Wert auch einer andersartigen Nährlösung streng zu überwachen. Die aus Polyäthylenfolie ausgebildeten Rinnen bewirken große Temperaturschwankungen von Wasser, was zu einem hohen Energieaufwand für Abkühlung und Beheizung der Nährlösung führt. Beim Einbau von Rinnen auf der Erde ist es schwer, ihnen eine richtige Abschrägung zu verleihen, was die zickzackförmige Strömung der Nährlösung und als Folge daraus die Bildung von stehender Nährlösung, Entwicklung von Algen, das ungleichmäßige Wachstum von kultivierbaren Pflanzen mit sich bringen kann. Die Nährlösung läßt sich mit dem Luftsauerstoff in vollem Ausmaß nicht belüften.

Bekannt sind weiterhin Verfahren zum erdelosen Aufziehen von Pflanzen im Gewächshaus, welche in der Anbringung und Befestigung von Pflanzen in Vegetationsgefäßen und Zufuhr einer Nährlösung in die Vegetationsgefäße (siehe zum Beispiel SU-Urheberscheine Nr. 147862, Kl. A01 G 31/02, veröff. 1962, Nr. 152987, Kl. A01 G 31/02, 1962) bestehen. Die Pflanzen wachsen auf Gestellen mit einem künstlichen Medium Substrat, welches durch die Nährlösung periodisch angeheizt wird. Beim Abfließen der Nährlösung vom Gestell bleiben die Poren des Substrats mit der Nährlösung aufgefüllt, während der die Teilchen des Substrats umgebende Raum mit Luft gefüllt wird. Das bewirkt einen günstigen Luft- und Wasserhaushalt der Ernährung zum Aufziehen von Pflanzen.

Der Nachteil dieses Verfahrens besteht in seiner geringen Wirksamkeit infolge Ungleichmäßigkeit der zeitlichen Senkrechtverteilung der Nährlösung, was die unzureichende Befeuchtung des Wurzelwerks und der Substratteilchen im Oberteil und die schwache Belüftung im Unterteil bewirkt; infolgedessen wird der optimale Luft- und Wasserhaushalt bei der Ernährung von Pflanzen gestört. Im Laufe des Wachstums von Pflanzen kommt es dazu, daß Salzablagerungen von Nährstoffen und der pathogenen Mikroflora auf der Oberfläche von Substratteilchen angesammelt werden, das Wurzelwerk von Planzen durch Substratteilchen beschädigt wird, welche unter ständiger Einwirkung der wäßrigen Lösung wandern. Es entstehen große Schwierigkeiten, verbunden mit der Notwendigkeit, das Substrat zu ersetzen, Wurzelreste beim Wechsel von Kulturen und verkümmerten Pflanzen zu regenerieren und zu entfernen, sowie Schwierigkeiten mit der Bekämpfung von Algen.

Bekannt ist eine Einrichtung zum Aufziehen von Pflanzen in Hydrokultur, die einen Behälter für die Nahrlösung, der durch Speiseleitung mit waagerecht liegenden polymeren Rohren in Verbindung steht, welche im Oberteil Öffnungen und gleichachsig aufgestellte Trägerkörper für Pflanzen aufweisen, und eine Aufnahmekammer, verbunden durch Rücklaufleitung mit dem Behälter für die Nährlösung über Pumpe (SU-PS Nr. 988240, Kl. A01 G 31/00, veröff. 1983) enthält. Diese Einrichtung stellt ein System von übereinander liegenden polymeren Hängerohren dar, in welche die Nährlösung zugeführt und auf allen Stufen in vorgegebener Höhe automatisch gehalten wird. In Rohrhohlräumen sind Abstandshalter mit Netzgebilden für Pflanzen angebracht, wobei die Aufspannung von Netzgebilden unter Berücksichtigung des Wachstums der Pflanzen senkrecht eingestellt wird. Es sei angemerkt, daß diese Einrichtung einen ziemlich komplizierten Aufbau hat, schwerfällig und betriebsunsicher ist. Das Prinzip, das dem konstruktionsmäßigen Wesen der Einrichtung zugrundeliegt, ermöglicht nicht, ihre Leistungsfähigkeit beim Aufziehen von verschiedenen Kulturen in Aerowasserkultur zu steigern.

Offenbarung der Erfindung

Der Erfindung liegt die Aufgabe zugrunde, eine Technologie zum Aufziehen von Pflanzen in Aerowasserkultur unter reglementierter Zufuhr einer Nährlösung auf ihr Wurzelsystem zur Erzielung höherer Erträge zu entwickeln und eine Anlage zur Durchführung dieser Technologie zu entwikkeln, die eine ausreichende Einfachheit und einen hohen Zuverlässigkeitsgrad besitzt.

Die gestellte Aufgabe wird durch ein Verfahren zum Aufziehen von Pflanzen in Aerowasserkultur gelöst, das in der Anbringung und Halterung von Pflanzen in Vegetationsgefäßen und Zufuhr einer Nährlösung in die letztgenannten besteht, bei welchem erfindungsgemäß als Vegetationsgefäße Rohre mit Offnungen in Wandung zur Anbringung von Pflanzen dienen, indem die Rohre waagerecht liegen, wobei man die Nährlösung periodisch innerhalb von der Zeit $t_1 = 4$ bis 5 min zuführt, dann sie innerhalb von der Zeit $t_2$ abgießt und die Pflanzen ohne Nährlösung innerhalb von der Zeit $t_3$ bei einem Verhältnis von $t_1 : t_2 : t_3$ wie 1:1,0 bis 1,5:5,0 bis 8,75 hält und anschließend den genannten Zyklus wiederholt.

Dank dieser Ausführungsform des Verfahrens kann man die Wasserversorgung, den Luftwechsel und die Assimilation der Nährstoffbestandteile durch das Wurzelsystem von wachsenden Pflanzen optimal vereinigen, was die Wirksamkeit beim Aufziehen derselben im ganzen erhöht.

Die Aufgabe ist weiterhin durch eine Anlage zum Aufziehen von Pflanzen in Aerowasserkultur gelöst worden, die einen Behälter für die Nährlösung, der durch Speiseleitung mit waagerecht liegenden polymeren Rohren in Verbindung steht, welche im Oberteil mehrere Offnungen und gleichachsig zu diesen aufgestellte Trägerkörper für Pflanzen aufweisen, und eine Aufnahmekammer, verbunden durch Rücklaufleitung mit dem Behälter für die Nährlösung über Pumpe enthält, bei der erfindungsgemäß polymere Rohre in einer Horizontalebene unter Bildung eines Rohrmoduls liegen und von einer der Seiten einen Verteiler, verbunden unmittelbar mit der Aufnahmekammer, haben, während die Speiseleitung mit einer Pumpe versehen und als Π-förmige Rohrletung, die mit der Aufnahmekammer verbunden ist, ausgebildet ist, wobei die letztgenannte mit dem Behälter für die Nährlösung durch Notleitung mit einem Ventil in Verbindung steht.

Diese konstruktionsmäßige Gestaltung der Anlage ermöglicht, die Zufuhr der Nährlösung zu den Wurzeln von wachsbaren Pflanzen zu vereinfachen, einen sicheren Betrieb aller Anlagenglieder zu erzielen beziehungsweise die Erhöhung der gesamten Leistungsfähigkeit der Anlage zu bewirken.

Der waagerechte Abschnitt der Π-förmigen Rohrleitung ist mit einem Mittel zur Belüftung der Nährlösung zweckmäßigerweise zu versehen. Dies bietet die Möglichkeit, den optimalen Sauerstoffhaushalt der Nährlösung zu entwickeln und ihn abhängig vom Typ der aufzuziehenden Kulturen zu variieren.

Polymere Rohre lassen sich geneigt in Richtung zum Verteiler anordnen. Dadurch kann der vollständige Abfluß der Nährlösung bei ihrem Rücklauf erreicht und der Luftzutritt dem ganzen Wurzelwerk von wachsenden Pflanzen waagerecht und senkrecht im Totalvolumen verschaffen werden, so daß die Pflanzen vor Verfaulen geschützt werden.

Es ist erwünscht, in Öffnungen der polymeren Rohre Stutzen mit Deckeln für die Anbringung der Träger von wachsenden Pflanzen einzubringen.

Deckel müssen Öffnungen haben, die mit denen in polymeren Rohren fluchtend sind. Diese konstruktionsmäßige Ausführungsform trägt dazu bei, schnell und ohne Mühe das Wachstum von Pflanzen und ihre richtige Halterung zu überwachen, sowie vereinfacht die Entfernung des Wurzelsystems nach der Vegetation der Pflanzen.

Es ist zweckmäßig, im Behälter für die Nährlösung einen Erhitzer zur Konstanthaltung der gegebenen Temperatur der Nährlösung einzubauen, was das Erzielen der optimalen Bedingungen für die Temperaturführung bei wachsenden Pflanzen bewirkt.

Kurze Beschreibung von Zeichnungen

In Fig. 1 ist ein Prinzipialschaltbild der Anlage zum Aufziehen von Pflanzen in Aerowasserkultur dargestellt.

Fig. 2 zeigt den Aufbau von Stutzen für polymere Rohre mit Trägern der Pflanzen.

Beste Ausführungsform der Anlage

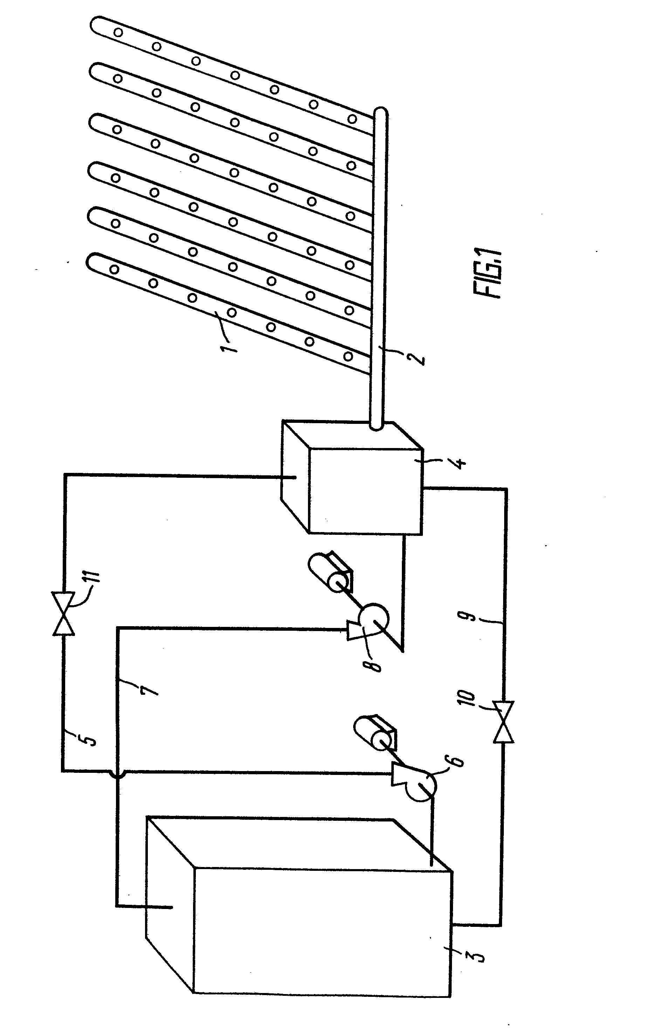

Eine Anlage (Fig.1) zum Aufziehen von Pflanzen in Aero-wasserkultur stellt einen Rohrmodul dar, der aus Sektionen von polymeren Rohren 1, angeordnet waagerecht oder geneigt in Richtung zu einem Verteiler 2, besteht. Der Verteiler 2 ist mit einem Behälter 3 für die Nährlösung durch eine Aufnahmekammer 4 und Π-förmige Speiseleitung 5 mit Pumpe 6 verbunden. Zum Rücklauf der Nährlösung in den Behälter 3 steht die Aufnahmekammer 4 mit diesem durch Rohrleitung 7 mit der Pumpe 8 in Verbindung. Für abnormale Bedingungen enthält die Anlage die Notleitung 9 mit Ventil 10, die die Aufnahmekammer 4 mit dem Behälter 3 verbindet. Auf dem waagerechten Abschnitt der Π-förmigen Leitung 5 ist ein Mittel 11 für die Belüftung der Nährlösung angeordnet.

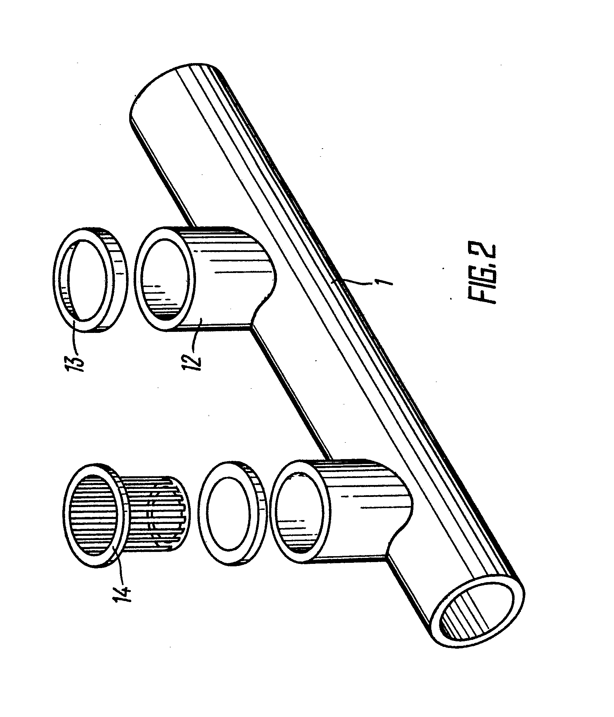

Jedes Rohr 1 des Moduls weist in seinem Oberteil mehrere Öffnungen auf, in denen Stutzen 12 (Fig. 2) mit Deckeln 13 aufgestellt sind. Die Deckel 13 haben Öffnungen zum Anbringen eines Trägers 14 für Pflanzen, welche mit den entsprechenden Öffnungen von Rohren 1 fluchtend sind.

Die Anlage arbeitet wie folgt.

Die wachsenden Pflanzen werden mittels Träger 14 in Öffnungen der Deckel 13 von Stutzen 12 gehalten, wobei die Stutzen in Öffnungen der polymeren Rohre 1 angeordnet sind. Man schaltet die Pumpe 6 ein, welche die angewärmte Nährlösung aus dem Behälter 3 durch Π-förmige Speiseleitung 5 in die hermetische Aufnahmekammer 4 fördert. Die Nährlösung wird durch einen (in der Zeichnung nicht gezeigt) beliebigen bekannten Erhitzer, eingebaut innerhalb des Behälters 3, erhitzt. Aus der Aufnahmekammer 4 fließt die Nährlösung durch den Verteiler 2 in Rohre 1 unmittelbar zu wachsenden Pflanzen. Die Nährlösung wird innerhalb von 4 bis 5 Minuten zugeführt. Im Verlauf der Zufuhr der Lösung zu den Pflanzen wird diese mit Hilfe des Mittels 11 belüftet. Danach wird die Pumpe 8 eingeschaltet, die innerhalb von 5 bis 6 Minuten die Nährlösung aus dem Rohrmodul in die Aufnahmekammer 4 und dann durch Rohrleitung 7 wieder in den Behälter 3 fördert. Die Pflanzen werden des weiteren 25 bis 30 Minuten lang gehalten, wonach der Zyklus wiederholt wird.

Bei der Betriebsstörung kommt es zum Auslösen des Ventils 10, und die Nährlösung gelangt im Selbstfluß aus dem Behälter 3 durch Notleitung 9 über die Aufnahmekammer 4 und den Verteiler 2 in die Rohre 1 zu den Pflanzen.

Beste Ausführungsform des Verfahrens

Es wurden die Aufzuchtversuche nach dem vorliegenden Verfahren mit Blumenkulturen und zwar mit Rosen, Nelken und Chrysanthemen unter optimalen Betriebsbedingungen durchgeführt.

Die Stecklinge der angegebenen Kulturen wurden genommen und in zu einem Rohrmodul vereinigten Rohren eingebracht. Dann führte man die 20 $^{o}$C warme Nährlösung in die waagerecht liegenden Rohre zu wachsenden Pflanzen innerhalb von 4,5 Minuten zu. Danach erfolgte der Abfluß der Nährlösung aus dem Rohrmodul innerhalb von 5,5 Minuten. Die Pflanzen wurden des weiteren ohne Nährlösung innerhalb von 30 Minuten gehalten, und den Zyklus wiederholte man mehrmals während der ganzen Periode der Entwicklung und Blüte der Kulturen bis zur Herstellung von Blütenpflanzen.

Die Hauptdaten des Schnittes von Blütenpflanzen nach dem erfindungsgemäßen Verfahren gegenüber dem bekannten (mechanisierten) sind nachstehend angegeben.

Tabelle 1

| lfd. Nr. | Hauptdaten | Kulturen | | | | | |
|---|---|---|---|---|---|---|---|
| | | Rose | | Nelke | Chrysanteme | | |
| | | nach dem bekannten Verfahren | nach dem neuen Verfahren | nach dem bekannten Verfahren | nach dem neuen Verfahren | nach dem bekannten Verfahren | nach dem neuen Verfahren |
| | 1. Schnittleistung je 1 m$^2$ Inventarfläche (in Stück Pflanzen) | 90 | 200 | 160 | 400 | 30 | 120 |
| | 2. Schnittgüte der Blütenpflanzen (extra + die erste Sorte in % zur Gesamtausbeute) | 55 | 75 | 45 | 75 | 70 | 85 |
| | 3. Minderung von Blütenpflanzenabfällen im ersten Jahr Pflanzung (in %) | 7 | 4 | 15 | 10 | 15 | 5 |
| | 4. Schnittzeitbeschleunigung nach der Pflanzung (in Tagen) | 60 | 50 | 103 | 85 | 120 | 95 |

Wie aus der Tabelle 1 zu ersehen ist, ermöglicht somit das vorliegende Verfahren den optimalen Luft- und Wasserhaushalt bei der Ernährung von wachsenden Pflanzen zu sichern, der in der Erhöhung der Produktausbeute, der Produktgüte und Verkürzung von Aufzuchtzeiten der Pflanzen besteht.

Die Anlage gemäß der vorliegenden Erfindung hat selbstverständlich ein Gerät zur Betriebssteuerung der Anlage gemäß der eingeführten Technologie.

Industrielle Anwendbarkeit

Am wirksamsten kann die vorliegende Erfindung in der Gewächshauswirtschaft, auf Großflächen zum Anbau von Gemüse, Melonenfrüchten und Blumenkulturen, im Obstbau, Waldbau sowie an Selektionsstationen bei der Neuzüchtung von aussichtsreichen Sorten zur Verwendung kommen.

PATENANSPRÜCHE

1. Verfahren zum Aufziehen von Pflanzen in Aerowasserkultur, das in der Anbringung und Halterung von Pflanzen in Vegetationsgefäßen und Zufuhr einer Nährlösung in die letztgenannten besteht, d a d u r c h  g e k e n n z e i c h n e t, daß als Vegetationsgefäße Rohre (1) mit Öffnungen in ihrer Wandung zur Anbringung von Pflanzen dienen, indem die Rohre (1) waagerecht liegen, wobei man die Nährlösung periodisch innerhalb von der Zeit $t_1$= 4 bis 5 Minuten zuführt, dann sie innerhalb von der Zeit $t_2$ abließt und die Pflanzen ohne Nährlösung innerhalb von der Zeit $t_3$ bei einem Verhältnis von $t_1:t_2:t_3$ wie 1:1,0 bis 1,5:5,0 bis 8,75 hält und anschließend den genannten Zyklus wiederholt.

2. Anlage zur Durchführung des Verfahrens nach Anspruch 1, die einen Behälter (3) für die Nährlösung, der durch Speiseleitung (5) mit waagerecht liegenden polymeren Rohren (1) in Verbindung steht, welche im Oberteil mehrere Öffnungen und fluchtend mit diesen aufgestellte Träger (14) für Pflanzen aufweisen, und eine Aufnahmekammer (4), verbunden durch Rücklaufleitung (7) mit dem Behälter (3) für die Nährlösung über Pumpe (8), enthält, d a d u r c h  g e k e n n z e i c h n e t, daß polymere Rohre (1) in einer Horizontalebene unter Bildung eines Rohrmoduls liegen und von einer der Seiten einen Verteiler (2), verbunden unmittelbar mit der Aufnahmekammer (4), haben, während die Speiseleitung (5) mit einer Pumpe (6) versehen und als Π -förmige Rohrleitung, die mit der Aufnahmekammer verbunden ist, ausgebildet ist, wobei die letztgenannte mit dem Behälter (3) die Nährlösung durch Notleitung (9) mit einem Ventil (10) in Verbindung steht.

3. Anlage nach Anspruch 2, d a d u r c h  g e k e n n z e i c h n e t, daß der waagerechte Abschnitt der Π -förmigen Rohrleitung ein Mittel (11) zur Belüftung der Nährlösung aufweist.

4. Anlage nach Anspruch 2, d a d u r c h  g e k e n n z e i c h n e t, daß die polymeren Rohre (1) geneigt in

0195824

Richtung zum Verteiler (2) angeordnet sind.

5. Anlage nach Anspruch 2, d a d u r c h g e -
k e n n z e i c h n e t, daß in Öffnungen der polymeren
Rohre (1) Stutzen (12) mit Deckeln (13) für die Anbringung der Träger (14) für die Pflanzen eingebracht sind.

6. Anlage nach Anspruch 5, d a d u r c h g e k e n n -
z e i c h n e t, daß die Deckel (13) der Stutzen (12) Öffnungen aufweisen, die mit denen in polymeren Rohren (1)
fluchtend sind.

7. Anlage nach Anspruch 2, d a d u r c h g e k e n n -
z e i c h n e t, daß im Behälter (3) für die Nährlösung
ein Erhitzer aufgestellt ist.

FIG.1

FIG. 2

# INTERNATIONAL SEARCH REPORT

International Application No PCT/SU 85/00082

0195824

## I. CLASSIFICATION OF SUBJECT MATTER (if several classification symbols apply, indicate all) *

According to International Patent Classification (IPC) or to both National Classification and IPC

IPC⁴ - A 01 G 31/00, 31/02

## II. FIELDS SEARCHED

**Minimum Documentation Searched** 7

| Classification System | Classification Symbols |
|---|---|
| IPC⁴ | A 01 G 31/00, 31/02 |

**Documentation Searched other than Minimum Documentation to the Extent that such Documents are included in the Fields Searched** 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | SU, A1, 147862, (V. A. Korbut et al.) November 1962 (11.62) | 1 |
| A | SU, A1, 152987 (E.I.Ermakov) 15 June 1963 (15.06.63) | 2-7 |
| | DE, C2, 1248360, (Výzkumný ústav zemědělskych stroju, Chodov) 21 March 1968 (21.03.68) | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 12 December 1985 (12.12.85) | 10 January 1986 (10.01.86) |

| International Searching Authority | Signature of Authorized Officer |
|---|---|
| ISA/SU | |